# EUROPÄISCHE PATENTSCHRIFT

(11) **EP 0 762 435 B1**
(45) Veröffentlichungstag und Bekanntmachung des Hinweises auf die Patenterteilung: **19.02.2003**
(21) Anmeldenummer: 96113049.9
(22) Anmeldetag: 14.08.1996
(51) Int. Cl.: H01B 9/02, H01B 13/26

(54) **Verfahren zur Herstellung von Energiekabeln**
Manufacturing process for energy-cables
Procédé de fabrication pour câbles d'énergie

(30) Priorität: 25.08.1995 DE 19531258
(43) Veröffentlichungstag der Anmeldung: 12.03.1997
(73) Patentinhaber: STOLBERGER METALLWERKE GMBH & CO. KG, D-52222 Stolberg (DE)
(72) Erfinder: Hohlstein, Martin, 52222 Stolberg (DE); Schleicher, Klaus, 52222 Stolberg (DE); Adler, Udo, 58455 Witten (DE)

(56) Entgegenhaltungen:
- GB-A- 852 619
- US-A- 4 540 630

## Beschreibung

Die Erfindung betrifft ein Verfahren zur Herstellung eines Verbundwerkstoffs zur Herstellung von Energiekabeln.

Bei der Übertragung und Verteilung elektrischer Energie in Netzen und Anlagen kommen Energiekabel der unterschiedlichsten Konfiguration zum Einsatz. Eine Form bilden sogenannte Schichtenmantelkabel, bei denen die leitenden Teile des Kabels konzentrisch von mehreren Schichten aus leitendem und nicht leitendem Material umgeben sind. Je nach Art und Ausbildung dienen die einzelnen Schichten zur Isolierung, zur Abschirmung oder als mechanischer Schutz.

Aus der Kommunikationstechnik und der Energiekabelkonstruktion im Niederspannungsbereich ist es bekannt, eine den elektrischen Leiter umgebende Schicht aus einem Verbundwerkstoff zu bilden, der aus einem kunststoffbeschichteten Kupferband besteht. Innerhalb der Kabelkonstruktion übernimmt diese Schicht die Aufgabe des Leiters für Kurzschlußströme bei Beschädigung des Kabels. Diese Schicht übernimmt damit die Funktion des sonst üblichen Drahtgeflechts. Weiterhin dient diese Schicht zur Abschirmung gegen äußere Einflüsse, insbesondere von Wasserzutritten.

Die Beschichtung des Kupferbands wird nach den bekannten Methoden vorgenommen. Hierzu stehen unterschiedliche Verfahren zur Verfügung, wie sie beispielsweise in "Dubbel Taschenbuch für den Maschinenbau", 17. Auflage, Seiten S 91 und S 92 beschrieben sind.

Ferner ist aus der GB-A-852 619, das als nächstliegender Stand der Technik angesehen wird, ein Verfahren zum Beschichten von Metallen mit einem linearen Mischpolyester bekannt.

Bei der Beschichtung wird der Kunststoff als festhaftende Schicht auf das Kupferband aufgebracht. Die Schicht und das Kupferband bilden dann einen Verbundkörper aus unterschiedlichen Stoffen. In Abhängigkeit von der Art und der Ausbildung des Beschichtungsmaterials bzw. der Unterlage entwickeln sich unterschiedlich starke Haftkräfte zwischen den Schichten.

Für den Einsatz bei der Kabelherstellung ist eine hohe Haftfestigkeit zwischen dem Kupferband und der Kunststoffbeschichtung erforderlich, da der Verbundwerkstoff sowohl bei der Kabelherstellung, bei der er zu einem Rohr gerollt wird, als auch bei der späteren Verwendung der Kabel Biege- und Druckvorgängen ausgesetzt wird. Diese können Relativbewegungen zwischen den beiden Schichten hervorrufen und so zumindest bereichsweise zum Auflösen des Haftbereichs führen.

Aus der EP 0 418 414 A1 ist es bekannt, zwischen der metallischen Unterlage und der Beschichtung eine zusätzliche Schicht zur Erhöhung der Haftfestigkeit vorzusehen. Hierbei handelt es sich um eine epoxidharzhaltige Schicht, die speziell hitzebehandelt werden und bestimmte stoffliche Zusammensetzung aufweisen muß. Diese Vorgehensweise ist jedoch mit zusätzlichem verfahrenstechnischen und materialtechnischen Aufwand für die Klebeschicht verbunden, wodurch sich auch höhere Kosten für den Verbundwerkstoff ergeben.

Der Erfindung liegt ausgehend vom Stand der Technik die Aufgabe zugrunde, ein einfaches und ökonomisches Verfahren zur Herstellung eines Verbundwerkstoffs zur Herstellung von Energiekabeln bereitzustellen, das keine zusätzliche Klebeschicht benötigt und sich anwendungstechnisch durch eine gute Verbundhaftung zwischen dem Kupferband und der Beschichtung auszeichnet.

Die Lösung dieser Aufgabe besteht nach den Merkmalen des Anspruchs 1 in der Herstellung von einem mit einem Kunststoff beschichteten Kupferband, welches nach der Beschichtung einer Wärmebehandlung mit einer Temperatur zwischen 200 °C und 400 °C unterzogen worden ist.

Bei der Wärmebehandlung durchläuft das zuvor beschichtete Kupferband eine Zone mit einer heißen Atmosphäre. Diese wird vorzugsweise von aufgeheiztem Gas gebildet. Durch Konvektion wird die Wärme auf das beschichtete Kupferband übertragen. Der direkten Einwirkung der heißen Atmosphäre ist der jeweilige Abschnitt des Kupferbands nicht länger als drei Sekunden ausgesetzt. Die Mindestdauer der Wärmebehandlung liegt bei zwei Sekunden. Als besonders vorteilhaft hat sich eine Verweilzeit von ca. 2,5 Sekunden herausgestellt.

Als Ausgangsprodukt wird ein Kupferband eingesetzt, das einoder beidseitig mit einem Kunststoff in herkömmlicher Weise, wie beispielsweise durch Extrusion oder Kaschierung beschichtet ist. Bei dem Kunststoff handelt es sich vorzugsweise um ein Copolymerisat des Polyethylens oder Polyvinylchlorids. Grundsätzlich ist jedoch jedes gebräuchliche organische Polymer als Beschichtung geeignet.

Erfindungsgemäß ist der Verbundwerkstoff insbesondere für Energiekabel im Mittelspannungsbereich von 10 kV bis 30 kV geeignet. Hierzu werden Kupferbänder mit einer Dicke in einem Bereich zwischen 0,05 mm bis 0,4 mm bei Breiten zwischen 70 mm und 170 mm eingesetzt. Die Dicke der Beschichtung liegt vorzugsweise im Bereich von 10 bis 80 µm.

Durch die spezielle Wärmebehandlung wird eine Steigerung der Adhäsion zwischen der Beschichtung und dem Kupferband erreicht. Dies bewirkt eine gute Verbindung im Haftbereich zwischen den beiden Schichten. Die hohe Haftfestigkeit verbessert die Einsetzmöglichkeiten des Verbundwerkstoffs. Die bislang eingesetzten copolymerbeschichteten Kupferbänder weisen eine Schälkraft von ca. 2 N pro 15 mm Breite auf. Dieser Wert wird bei dem erfindungsgemäßen Verbundwerkstoff ungefähr verdreifacht. Dementsprechend ist der Verbundwerkstoff auch wesentlich unempfindlicher gegenüber den mechanischen Beanspruchungen, die er bei der Kabelherstellung durch das Rollen oder bei der Kabelverlegung mit Biegewechselbeanspruchungen erfährt. Auch im Überlappungsbereich des zu einem Rohr geformten Bandquerschnitts ergibt sich bei dem erfindungsgemäβen Verbundwerkstoff eine höhere Haftung und Dichtigkeit.

Eine besonders vorteilhafte Weiterentwicklung des erfindungsgemäßen Grundgedankens wird in den Merkmalen des Anspruchs 2 gesehen, wonach die Wärmebehandlung in einem Temperaturbereich zwischen 300 °C und 350 °C erfolgt. Dieser Temperaturbereich hat sich sowohl verfahrens- als auch anwendungstechnisch als besonders vorteilhaft erwiesen.

Zur Vermeidung von unerwünschten Reaktionen des Materials mit der Atmosphäre, wie beispielsweise einer Oxidation des Kupfers, erfolgt die Wärmebehandlung des eingesetzten Kupferbands gemäß den Merkmalen des Anspruchs 3 in einer Schutzgasatmosphäre. Obwohl die Schutzgasatmosphäre grundsätzlich unterschiedliche Zusammensetzung haben kann, handelt es sich hierbei nach Anspruch 4 vorteilhaft um eine Mischgasatmosphäre aus Stickstoff und Wasserstoff mit einem maximalen Wasserstoffanteil von 4 %. Hierdurch werden Reaktionen mit der Atmosphäre zuverlässig verhindert. Gleichzeitig dient das Gas als Wärmeträger.

Grundsätzlich ist jede Einrichtung für die Wärmebehandlung geeignet, die die zuvor beschriebenen Betriebsparameter schafft. Eine besonders vorteilhafte Möglichkeit der Wärmebehandlung zeigt Anspruch 5. Danach wird die Wärmebehandlung in einer Durchziehofenanlage vorgenommen. Diese läßt sich in vorteilhafter Weise in den Produktionsprozeß einbinden. Die Wärmebehandlung kann hier im Nachgang zu dem Beschichtungsprozeß oder in unmittelbarer Linie mit dem Beschichtungsprozeß kontinuierlich vorgenommen werden.

Nach den Merkmalen des Anspruchs 6 wird der Verbundwerkstoff durch geeignete Kühlzonen am Auslauf nach der Wärmebehandlung auf eine Temperatur unter 80 °C abgekühlt. Hierdurch wird eine Oxidation des Kupfers vermieden. Anschließend kann der Verbundwerkstoff unmittelbar der Weiterverwendung zugeführt werden.

In einer weiteren Ausgestaltung des erfindungsgemäßen Grundgedankens wird das Kupferband vor der Wärmebehandlung zu einem Rohr geformt (Anspruch 7). Damit wird ein Teilschritt der späteren Kabelherstellung vor der Wärmebehandlung durchgeführt. Diese Maßnahme wirkt sich vorteilhaft auf die Haftfestigkeit im Überlappungsbereich der Stoßstellen und auch die Querdichtigkeit der später hergestellten Kabel aus.

Das erfindungsgemäße Verfahren geht von einem kunststoffbeschichteten Kupferband aus, welches eine Heizzone kontinuierlich durchläuft, in der das Kupferband mit einer Temperatur von 200 °C bis 400 °C behandelt wird. Vorteilhaft geschieht dies durch heißes Gas. Die Verweilzeit in der Heizzone liegt zwischen 2 und 3 Sekunden. Üblicherweise entspricht dies einem Bandfortschritt von ca. 30 m bis 40 m pro Minute. Der Heizzone kann vorteilhaft eine Kuhlzone nachgeordnet sein, in der das Band beispielsweise von einem kalten Gas umströmt wird und so auf eine Temperatur unterhalb von 80 °C gebracht wird.

Das Verfahren kann im Nachgang zu dem Beschichtungsprozeß durchgeführt werden. Das beschichtete Kupferband wird dann von einem Coil abgezogen, thermisch behandelt und anschließend wieder aufgerollt. Das erfindungsgemäße Verfahren ist aber auch in gleicher Weise geeignet, dem Beschichtungsprozeß unmittelbar nachgeschaltet zu werden.

Die Behandlung des mit der Beschichtung versehenen Kupferbands ist einfach und kostengünstig. Sie liefert einen Verbundwerkstoff mit einer erheblich verbesserten Haftfestigkeit zwischen Kupfer und Beschichtung. Dementsprechend erlaubt die Erfindung, den Einsatz von kunststoffbeschichteten Kupferbändern auf Kabel für den Mittelspannungsbereich auszudehnen. Der Querschnitt dieser Kabel liegt üblicherweise zwischen 35 mm² und 500 mm². Das Material der Kunststoffbeschichtung und das Material des äußeren Kabelmantels können so aufeinander abgestimmt werden, daß eine gute Affinität gewährleistet ist. Damit ist eine sichere und dauerhafte Verbindung von Ummantelungswerkstoff und Metall möglich. Die feste Versiegelung bewirkt einen erhöhten Schutz gegen Feuchtigkeit und Korrosion. Auch die Gasdichtigkeit wird verbessert und verhindert zusätzlich den Austritt von Füllkomponenten aus dem Kabelinneren. Alle diese Eigenschaften gewährleisten einen ungestörten Betrieb des Energiekabels.

Die Erfindung ist nachfolgend anhand von in den Zeichnungen dargestellten Ausführungsbeispielen beschrieben. Es zeigen:
- Figur 1: einen Ausschnitt aus einem erfindungsgemäßen Verbundwerkstoff;
- Figur 2: den Querschnitt eines Energiekabels für den Mittelspannungsbereich, bei dem eine Schicht aus dem erfindungsgemäßen Verbundwerkstoff gebildet ist, und
- Figur 3: in technisch generalisierter Darstellungsweise eine Behandlungsanlage.

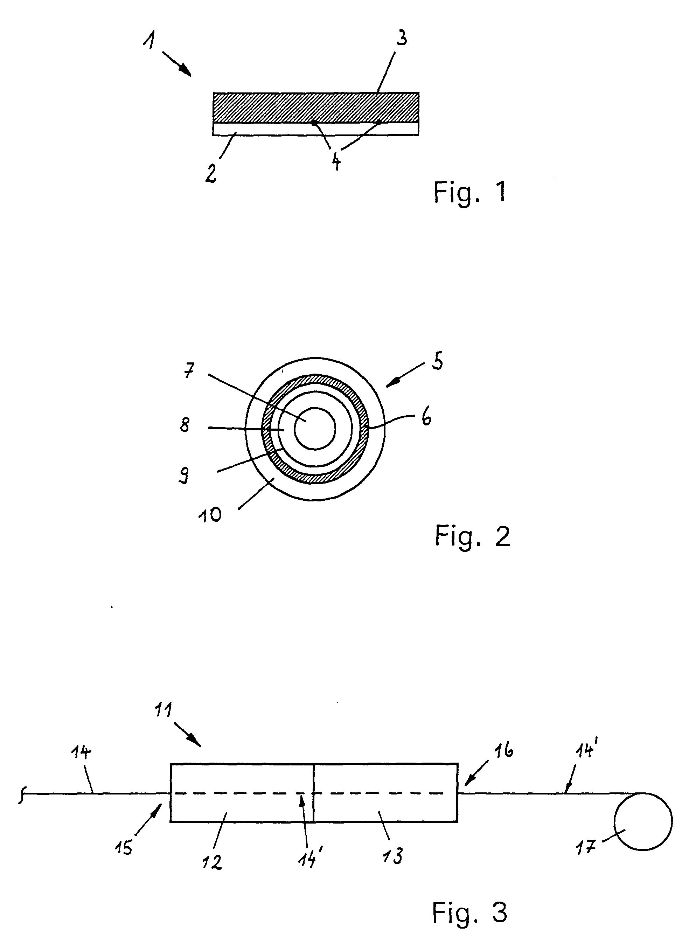

Die Figur 1 zeigt einen Ausschnitt aus einem bandförmigen Verbundwerkstoff 1, der aus einem Kupferband 2 und einer Beschichtung 3 aus einem Copolymer besteht. Die Darstellung der Figur 1 ist nicht maßstäblich zu verstehen. Die Dicke des Kupferbands 2 liegt für den Einsatz des Verbundwerkstoffs 1 bei der Herstellung von Energiekabeln des Mittelspannungsbereichs zwischen 0,05 mm bis 0,4 mm, wobei die Beschichtung 3 in einer Stärke von 50 g/m² bis 100 g/m² aufgebracht wird.

Durch die nach dem Beschichtungsvorgang vorgenommene Wärmebehandlung mit einer Temperatur zwischen 300 °C und 350 °C unter einer Schutzgasatmosphäre wird eine wesentlich höhere Verbundhaftung im Haftbereich 4 zwischen dem Kupferband 2 und der Beschichtung 3 erreicht. Der Verbundwerkstoff ist damit geeignet, auch bei Energiekabeln größeren Querschnitts und höherer Leistungsübertragung eingesetzt zu werden.

Aus der Figur 2 geht ein Energiekabel 5 hervor, bei dem der Verbundwerkstoff 6 aus dem copolymerbeschichteten Kupferband die Funktion des Leiters für Kurzschlußströme übernimmt. Gleichzeitig gewährleistet der Verbundwerkstoff 6 eine hohe Querdichtigkeit gegen äußere Wasserzutritte. Hierzu ist der Verbundwerkstoff 5 rohrförmig gerollt und an den Stoßstellen wasserdicht verbunden.

In der Figur 2 sind im übrigen der Innenleiter aus Kupfer oder Aluminium mit 7, eine Isolierhülle mit 8, eine Leitschicht mit 9 und der äußere Mantel aus Polyethylen mit 10 bezeichnet. Die Leitschicht 9 ist extrudiert oder aus leitfähigem Kreppapier.

Aus der Figur 3 geht eine Behandlungsanlage 11 mit einer Heizzone 12 und einer Kühlzone 13 hervor.

Ein kunststoffbeschichtetes Kupferband 14 wird kontinuierlich durch die Behandlungsanlage 11 gezogen. Am Eintritt 15 hat das Kupferband 14 eine Temperatur, die in etwa der Umgebungstemperatur entspricht. In der Heizzone 12 wird das Kupferband 14 von einem 300 °C bis 350 °C heißen Schutzgas umströmt. Hierbei wird das beschichtete Kupferband 14 kontinuierlich mit einem Fortschritt von 30 m/min bis 40 m/min durch die Behandlungsanlage 11 gezogen. Damit ergibt sich eine flächenbezogene Verweilzeit des Kupferbands 14 in der Heizzone von ca. 2,5 Sekunden. Durch den Wärmeeinfluß stellt sich die höhere Verbundhaftung zwischen der Kunststoffbeschichtung und dem Kupferband ein. Es bildet sich somit der Verbundwerkstoff 14'.

In der nachgeordneten Kühlzone 13 wird eine Rückkühlung des Verbundwerkstoffs 14' vorgenommen, so daß dieser am Austritt 16 eine Temperatur von weniger als 80 °C besitzt. Im Anschluß daran wird der Verbundwerkstoff 14' auf einen Coil 17 aufgerollt.

### Bezugszeichenaufstellung

- 1 -: Verbundwerkstoff
- 2 -: Kupferband
- 3 -: Beschichtung
- 4 -: Haftbereich
- 5 -: Energiekabel
- 6 -: Verbundwerkstoff
- 7 -: Innenleiter
- 8 -: Isolierhülle
- 9 -: Leitschicht
- 10 -: Mantel
- 11 -: Behandlungsanlage
- 12 -: Heizzone
- 13 -: Kühlzone
- 14 -: kunststoffbeschichtetes Kupferband
14' - Verbundwerkstoff
- 15 -: Eintritt v. 11
- 16 -: Austritt v. 11
- 17 -: Coil

## Patentansprüche

1. Verfahren zur Herstellung eines Verbundwerkstoffs zur Herstellung von Energiekabeln, **dadurch gekennzeichnet, daß** ein Bestandteil des Verbundwerkstoffs (1, 6, 14') bildendes mit einem Kunststoff (3) beschichtetes Kupferband (2, 14) nach der Beschichtung im Durchlaufverfahren einer Wärmebehandlung in einer 200 °C bis 400 °C heißen Atmosphäre während einer Dauer von 2 bis 3 Sekunden unterworfen wird.

2. Verfahren nach Anspruch 1, **dadurch gekennzeichnet, daß** das Kupferband (2, 14) einer Wärmebehandlung bei einer Temperatur zwischen 200 °C und 350 °C unterzogen wird.

3. Verfahren nach Anspruch 1 oder 2, **dadurch gekennzeichnet, daß** das Kupferband (2, 14) in einer Schutzgasatmosphäre behandelt wird.

4. Verfahren nach Anspruch 3, **dadurch gekennzeichnet, daß** als Schutzgasatmosphäre eine Mischgasatmosphäre aus Stickstoff (N₂) und Wasserstoff (H₂) mit einem Wasserstoffanteil von maximal 4 % verwendet wird.

5. Verfahren nach einem der Ansprüche 1 bis 4, **dadurch gekennzeichnet, daß** die Wärmebehandlung in einem Durchziehofen durchgeführt wird.

6. Verfahren nach einem der Ansprüche 1 bis 5, **dadurch gekennzeichnet, daß** der heißen Atmosphäre eine Zone (13) mit einer kühlenden Atmosphäre nachgeordnet wird, in der der Verbundwerkstoff auf eine Temperatur unterhalb von 80 °C abgekühlt wird.

7. Verfahren nach einem der Ansprüche 1 bis 6, **dadurch gekennzeichnet, daß** das Kupferband als Rohr der Wärmebehandlung zugeführt wird.

## Claims

1. Method for production of a sandwich material for production of power cables, **characterised in that** a copper strip (2, 14) coated with a plastic (3) and forming one component of the sandwich material (1, 6, 14') after coating in a continuous process is subjected to a heat treatment in a hot atmosphere at 200°C to 400°C for a time of 2 to 3 seconds.

2. Method according to claim 1, **characterised in that** the copper strip (2, 14) is subjected to a heat treatment at a temperature between 200°C and 350°C.

3. Method according to claim 1 or 2, **characterised in that** the copper strip (2, 14) is treated in a protective gas atmosphere.

4. Method according to claim 3, **characterised in that** a mixed gas atmosphere of nitrogen (N₂) and hydrogen (H₂) with a maximum hydrogen content of 4% is used as protective gas atmosphere.

5. Method according to one of claims 1 to 4, **characterised in that** the heat treatment is carried out in a continuous oven.

6. Method according to one of claims 1 to 5, **characterised in that** the hot atmosphere is followed by a zone (13) with a cooling atmosphere in which the sandwich material is cooled to a temperature below 80°C.

7. Method according to one of claims 1 to 6, **characterised in that** the copper strip is fed to the heat treatment as a tube.

## Revendications

1. Procédé de fabrication d'une matière composite pour réaliser des câbles électriques de puissance,
**caractérisé en ce qu'**
après revêtement, un ruban de cuivre (2, 14) revêtu d'une matière plastique (3) faisant partie de l'ensemble des matières composites (1, 6, 14'), est, selon un procédé de passage par un traitement thermique, soumis à une température comprise entre 200°C et 400°C, à une atmosphère chaude pendant une durée de 2 à 3 secondes.

2. Procédé selon la revendication 1,
**caractérisé en ce que**
le ruban de cuivre (2, 14) est soumis à un traitement thermique à une température comprise entre 200°C et 350°C.

3. Procédé selon l'une quelconque des revendications 1 ou 2,
**caractérisé en ce qu'**
on traite le ruban de cuivre (2, 14) dans une atmosphère de gaz protecteurs.

4. Procédé selon la revendication 3,
**caractérisé en ce que**
comme atmosphère de gaz protecteurs on utilise une atmosphère mixte d'azote (N₂) et d'hydrogène (H₂) avec une teneur en hydrogène au maximum de 4 %.

5. Procédé selon l'une quelconque des revendications 1 à 4,
**caractérisé en ce que**
le traitement thermique est effectué dans un four à passage.

6. Procédé selon l'une quelconque des revendications 1 à 5,
**caractérisé en ce que**
l'atmosphère chaude est suivie d'une zone (13) d'atmosphère froide en aval, dans laquelle on refroidit la matière composite à une température inférieure à 80°C.

7. Procédé selon l'une quelconque des revendications 1 à 6,
**caractérisé en ce que**
le ruban de cuivre est amené au traitement thermique sous forme de tube.
